# EUROPEAN PATENT APPLICATION

(11) **EP 4 311 584 A2**
(43) Date of publication of application: **31.01.2024**
(21) Application number: 23182171.1
(22) Date of filing: 28.06.2023
(51) Int. Cl.: A63F 13/53, A63F 13/22, A63F 13/42

(54) **DATA PROCESSING APPARATUS AND METHOD**

(30) Priority: 08.07.2022 GB 202210018
(71) Applicant: Sony Interactive Entertainment Inc., Tokyo 108-0075 (JP)
(72) Inventor: SCHEMBRI, Danjeli, London, W1F 7LP (GB); DOWNEY, Richard, London, W1F 7LP (GB); TAN, Bee Lay, London, W1F 7LP (GB); LEUNG, Francesca, London, W1F 7LP (GB)
(74) Representative: D Young & Co LLP

(57) **Abstract**

A data processing apparatus comprising circuitry configured to: execute a first video game application, wherein execution of the first video game application comprises generating first control information indicative of one or more controls for controlling the first video game application; execute a control indication program using the first control information to indicate the one or more controls for controlling the first video game application to a user; execute a second video game application, wherein execution of the second video game application comprises generating second control information indicative of one or more controls for controlling the second video game application; and execute the control indication program using the second control information to indicate the one or more controls for controlling the second video game application to a user.

## Description

### BACKGROUND

### Field of the Disclosure

This disclosure relates to a data processing apparatus and method.

### Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

Some users may find it difficult to remember the controls to interact with electronic content such as video games (e.g. which buttons to press to cause a video game character to perform certain actions). Such users may include, for example, adults or children with memory problems or other learning difficulties.

It is sometimes known to indicate the controls at an initial stage (e.g. during a training or sandbox session of a video game). However, it is then assumed the user knows the controls and thus the controls are no longer indicated. A user may be able to manually look up the controls (e.g. by manually pausing the game and access a particular game menu). However, this is cumbersome for the user and may, for example, disrupt the flow of the gameplay, thereby detracting from the user's experience.

There is a desire to address this problem.

### SUMMARY

The present disclosure is defined by the claims.

### BRIEF DESCRIPTION OF THE DRAWINGS

Non-limiting embodiments and advantages of the present disclosure are explained with reference to the following detailed description taken in conjunction with the accompanying drawings, wherein:
Fig. 1 schematically illustrates an example entertainment system;
Figs. 2A and 2B schematically illustrate example components of the entertainment system;
Figs. 3A and 3B schematically illustrate a video game controller;
Fig. 4 schematically illustrates indication of a set of controls during execution of a video game application according to a first example;
Fig. 5 schematically illustrates indication of a set of controls during execution of a video game application according to a second example;
Fig. 6 schematically illustrates indication of a set of controls during execution of a video game application according to a third example;
Fig. 7 illustrates an example data structure;
Fig. 8 schematically illustrates indication of a set of controls during execution of a video game application according to a fourth example;
Fig. 9 schematically illustrates indication of a set of controls during execution of a video game application according to a fifth example; and
Figs. 10A-C illustrate example methods.

Like reference numerals designate identical or corresponding parts throughout the drawings.

### DETAILED DESCRIPTION OF THE EMBODIMENTS

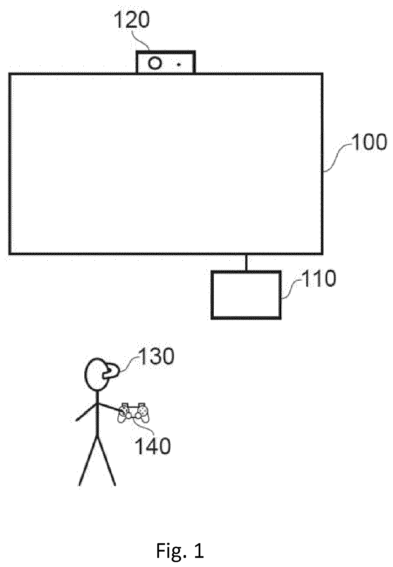

Fig. 1 schematically illustrates an entertainment system suitable for implementing one or more of the embodiments of the present disclosure. Any suitable combination of devices and peripherals may be used to implement embodiments of the present disclosure, rather than being limited only to the configuration shown.

A display device 100 (e.g. a television or monitor), associated with a games console 110, is used to display content to one or more users. A user is someone who interacts with the displayed content, such as a player of a game, or, at least, someone who views the displayed content. A user who views the displayed content without interacting with it may be referred to as a viewer. This content may be a video game, for example, or any other content such as a movie or any other video content. The games console 110 is an example of a content providing device or entertainment device; alternative, or additional, devices may include computers, mobile phones, set-top boxes, and physical media playback devices, for example. In some embodiments the content may be obtained by the display device itself - for instance, via a network connection or a local hard drive.

One or more video and/or audio capture devices (such as the integrated camera and microphone 120) may be provided to capture images and/or audio in the environment of the display device. While shown as a separate unit in Fig. 1, it is considered that such devices may be integrated within one or more other units (such as the display device 100 or the games console 110 in Fig. 1).

In some implementations, an additional or alternative display device such as a head-mountable display (HMD) 130 may be provided. Such a display can be worn on the head of a user, and is operable to provide augmented reality or virtual reality content to a user via a near-eye display screen. A user may be further provided with a video game controller 140 which enables the user to interact with the games console 110. This may be through the provision of buttons, motion sensors, cameras, microphones, and/or any other suitable method of detecting an input from or action by a user.

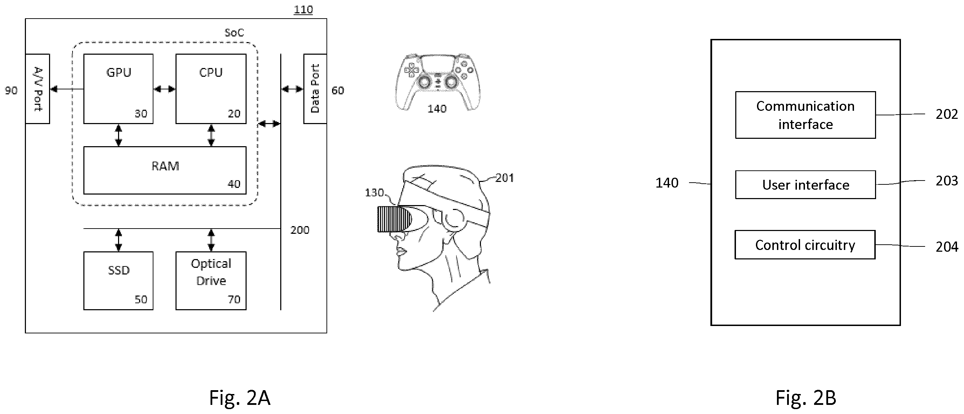

Fig. 2A shows an example of the games console 110. An example is the Sony ^{®} PlayStation 5 ^{®} (PS5).

The games console 110 comprises a central processing unit or CPU 20. This may be a single or multi core processor, for example comprising eight cores as in the PS5. The games console also comprises a graphical processing unit or GPU 30. The GPU can be physically separate to the CPU, or integrated with the CPU as a system on a chip (SoC) as in the PS5.

The games console also comprises random access memory, RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive (SSD), or an internal SSD as in the PS5.

The games console may transmit or receive data via one or more data ports 60, such as a universal serial bus (USB) port, Ethernet ^{®} port, WiFi ^{®} port, Bluetooth ^{®} port or similar, as appropriate. It may also optionally receive data via an optical drive 70.

Interaction with the games console is typically provided using one or more instances of the controller 140, such as the DualSense ^{®} handheld controller in the case of the PS5. In an example, communication between each controller 140 and the games console 110 occurs via the data port(s) 60.

Audio/visual (A/V) outputs from the games console are typically provided through one or more A/V ports 90, or through one or more of the wired or wireless data ports 60. The A/V port(s) 90 may also receive audio/visual signals output by the integrated camera and microphone 120, for example. The microphone is optional and/or may be separate to the camera. Thus, the integrated camera and microphone 120 may instead be a camera only. The camera may capture still and/or video images.

Where components are not integrated, they may be connected as appropriate either by a dedicated data link or via a bus 200.

As explained, examples of a device for displaying images output by the game console 110 are the display device 100 and the HMD 130. The HMD is worn by a user 201. In an example, communication between the display device 100 and the games console 110 occurs via the A/V port(s) 90 and communication between the HMD 130 and the games console 110 occurs via the data port(s) 60.

Fig. 2B shows some example components of the controller 140. The controller comprises a communication interface 202 for transmitting wireless signals to and/or receiving wireless signals from the games console 110 (e.g. via data port(s) 60) and a user interface 203 for receiving input from the user (e.g. comprising one or more of buttons, motion sensor(s), camera(s), microphone(s) or the like, as previously described) and/or outputting information to the user (e.g. via a built-in loudspeaker or built in electronic lighting (not shown)). The communication interface 202 and user interface 203 are controlled by control circuitry 204 of the controller 140.

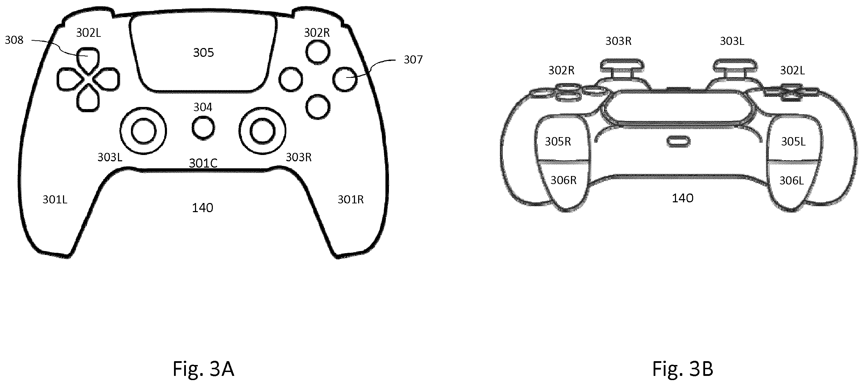

In Figs. 3A and 3B, a DualSense ^{®} controller is illustrated as an example of a controller 140 (in this case, a handheld controller). Such a controller typically has two handle sections 301L, 301R and a central body 301C. Various controls are distributed over the controller, typically in local groups. Examples include a left button group 302L, which may comprise directional controls (including up directional button 308) and/or one or more shoulder buttons, and similarly right button group 302R, which comprise function controls (including a rightmost function control button 307) and/or one or more shoulder buttons. The controller also includes left and/or right joysticks 303L, 303R, which may optionally also be operable as buttons by pressing down on them.

The controller (typically in the central portion of the device) may also comprise one or more system buttons 304, which typically cause interaction with an operating system of the entertainment device rather than with a game or other application currently running on it. Such system buttons may summon a system menu or allow for recording or sharing of displayed content, for example. Furthermore, the controller may comprise one or more other elements such as a touchpad 305 (which may optionally also be operable as a button by pressing down on it), a light for optical tracking (not shown), a screen (not shown), haptic feedback elements (not shown), and the like.

Fig. 3B shows the controller 140 from a different perspective to that of Fig. 3A and shows the shoulder buttons in more detail. Left hand shoulder buttons (which are part of the left button group 302L) include a first button 305L and a second button 306L. The second button 306L may be in the form of a trigger. Similarly, right hand shoulder buttons (which are part of the right button group 302R) include a first button 305R and a second button 306R. The second button 306R may again be in the form of a trigger. All the controls of the controller 140 shown in Figs. 3A and 3B are part of the user interface 203 of the controller 140.

The same controller (such as that exemplified in Figs. 3A and 3B) may be used for interacting with different content. This means the controls will be associated with different functions for different content. For example, in one video game such as a racing game, a given button (e.g. second shoulder button 306R) may perform a function such as causing a vehicle in the game to accelerate. However, in another video game such as an action-adventure game, the same button may perform a completely different function such as causing a weapon to fire. This means it can be difficult for users (in particular, those with memory problems or other learning difficulties) to remember what each control does in a given game.

Furthermore, only a portion of all the controls of the controller may be relevant at a given point in the game. For instance, in an action-adventure game in which a character controlled by the user is in a safe environment (e.g. with no enemy characters in the vicinity), the most relevant controls may be those associated with allowing the character to navigate the environment. For example, the controls instructing the character to crouch (or go prone), to run and to jump may be the most relevant. On the other hand, when the character is in a dangerous environment (e.g. if they are under attack from an enemy character), the most relevant controls may be those associated with allowing the character to defend themselves. For example, the controls instructing the character to aim and fire a weapon may be the most relevant. Thus, as well as a user having to remember what each of the controls does throughout the game, they must also be able to quickly select the most relevant controls depending on the situation in the game. Again, this can be difficult for some users.

To help alleviate these problems, the present technique allows the controls which are relevant over a given time period during the provision of content to be indicated to the user with the provision of the content during that time period. When the relevant controls change (due to, for example, a change in a situation during a video game such as a character moving from a safe environment to a dangerous environment), the controls indicated to the user also change accordingly. The relevant controls are therefore dynamically indicated in real time. This allows the user to be able to more quickly and easily identify what the most relevant controls are at any point during the provision of the content without them needing to interrupt the content provision (e.g. by pausing the content). User accessibility is therefore improved, especially for users who may otherwise have difficulty remembering and/or identifying the relevant controls at any given point during the content provision.

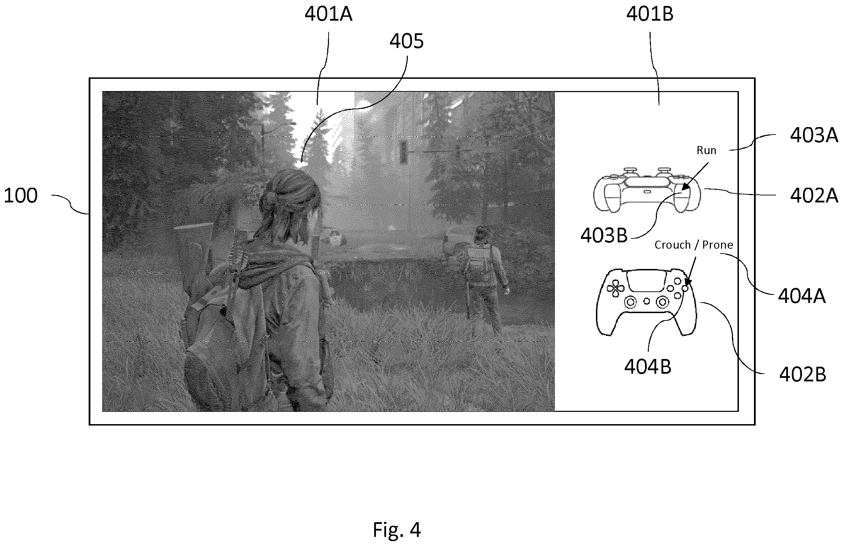

Fig. 4 illustrates a first example of the present technique. In this example, the content is a video game displayed on the display device 100. In order to allow the relevant controls to be indicated to the user, the video image displayed is divided into two parts, a first part 401A on which the video game is displayed and a second part 401B on which images indicative of the relevant controls are displayed. The first part 401A may be referred to as a gaming pane and the second part 401B may be referred to as a control pane. In this example, the images indicative of the relevant controls include a representation of a DualSense ^{®} controller 140 (as exemplified in Figs. 3A and 3B). There is a first image 402A of the controller in a first orientation and a second image 402B of the controller in a second, different, orientation.

For illustrative purposes, two relevant controls are indicated here (although a different number of relevant controls may be indicated). In particular, a "Run" control and a "Crouch / Prone" control are indicated.

The "Run" control is indicated by a label 403A "Run" pointing to a representation 403B of the button 305L in the image. This indicates to the user that the character 405 controlled by the user in the game can be caused to undertake a running action by pressing the button 305L on the controller 140.

Similarly, the "Crouch / Prone" control is indicated by a label 404A "Crouch / Prone" pointing to a representation 404B of the rightmost function control button 307 of the right button group 302R. This indicates to the user that the character 405 controlled by the user in the game can be caused to undertake a crouching action or to move to a prone position by pressing the button 307 on the controller 140. In an example, a short press (that is, where the button is continually depressed for less than a predetermined time period) may cause the character 405 to undertake a crouching action whereas a long press (that is, wherein the button is continually depressed for more than the predetermined time period) may cause the character to move to a prone position.

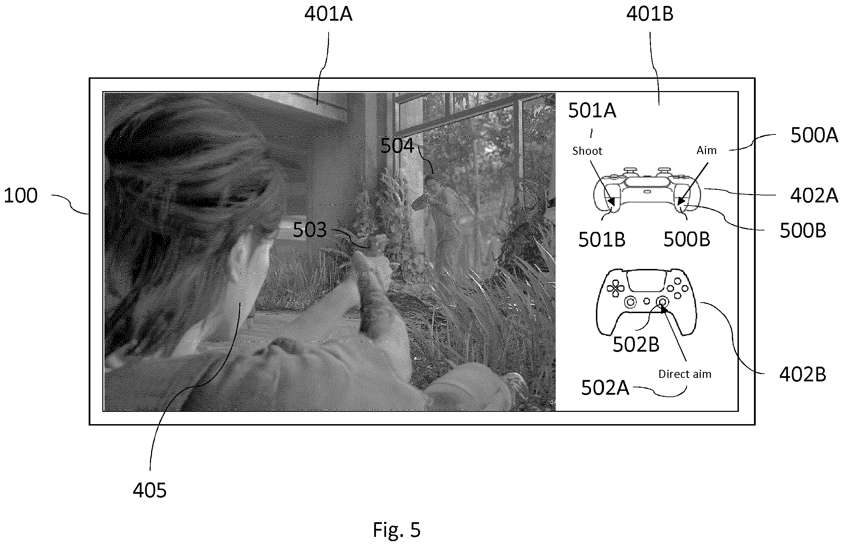

In Fig. 4, the character 405 controlled by the user is in a first situation in the game. In particular, they are in a non-combat situation (e.g. a situation in which there are no enemy characters within a predetermined distance of the character 405 in the virtual game environment). The indicated "Run" and "Crouch / Prone" controls are therefore relevant to this non-combat situation (for example, since they assist the user in controlling the character to explore and navigate the virtual landscape of the game). If the character's situation changes, however, then a different set of relevant controls may be indicated, as exemplified in Fig. 5.

In Fig. 5, the character 405 is now in a second situation in the game. In particular, they are in a combat situation (e.g. a situation in which there is at least one enemy character within a predetermined distance of the character 405 in the virtual game environment). The character's situation may change depending on, for example, where the user controls the character to travel to in the virtual game environment (e.g. travelling from a safe region with no enemy characters within a predetermined distance to a dangerous region with at least one enemy character within the predetermined distance) or depending on the storyline of the game (e.g. if enemy characters arrive unexpectedly and begin attacking the character 405).

In the combat situation of Fig. 5, the relevant controls are no longer the "Run" and "Crouch / Prone" controls. Instead, the relevant controls are a "Shoot" control, an "Aim" control and a "Direct aim" control. These controls are relevant to the combat situation because they allow the character 405 to defend themselves by firing a weapon at enemies in the game. The "Shoot", "Aim" and "Direct aim" controls are therefore indicated in the control pane 401B instead of the "Run" and "Crouch / Prone" controls in response to the situation of the character 405 changing from the first (non-combat) situation to the second (combat) situation.

The "Shoot" control is indicated by a label 501A "Shoot" pointing to a representation 501B of the button 306R in the image. This indicates to the user that the character 405 controlled by the user in the game can be caused to fire a weapon 503 by pressing the button 306R on the controller 140.

The "Aim" control is indicated by a label 500A "Aim" pointing to a representation 500B of the button 306L in the image. This indicates to the user that the character 405 controlled by the user in the game can be caused to aim the weapon 503 by pressing the button 306L on the controller 140.

The "Direct aim" control is indicated by a label 502A "Direct aim" pointing to a representation 502B of the right joystick 303R in the image. This indicates to the user that the character 405 controlled by the user in the game can be caused to change the direction of the aim of the weapon 503 (that is, the direction in which the weapon is fired) by moving the right joystick 303R on the controller 140.

In an example, the weapon must first be aimed by the user pressing the button 306L. While continuing to press the button 306L, the weapon can then be aimed at a target 504 (in this case, an enemy character attacking the character 405 controlled user) using the right joystick 303R. Once the weapon is aimed at the target, while still continuing to press the button 306L, the weapon can be fired by pressing the button 306R.

Figs. 4 and 5 thus exemplify how the controls indicated in the control plane 401B may be dynamically changed depending on the situation of the character 405 controlled by the user in the game. This allows the most relevant controls to be indicated to the user in real time as they interact with the games console 110 via the controller 140 to play the game. This allows the user to quickly and easily know which controls to use without having to pause the game to look up the controls and without being inundated with too much information (as may be the case if, for example, all controls, rather than only the most relevant controls for the situation, are indicated). The user's experience in interacting with the game is therefore improved.

Controls may have different levels of relevance in a game. For example, controls with a first, higher, level of relevance may be associated with fundamental functions of the game, such as controlling basic movements of a gaming character in the virtual game environment. Controls with a second, lower, level of relevance may then be associated with non-fundamental but nonetheless useful functions of the game, such as more complex character behaviours associated with the game storyline. In an example, such non-fundamental functions are those which, unlike fundamental functions, are not essential for enabling the game to be played (such as allowing a character to move around the virtual game environment) but which may allow a richer gaming experience if utilised. Fundamental and non-fundamental controls may vary depending on the specific video game being played.

Instead, or in addition, the controls of the second, lower, relevance level may not be less fundamental but may be more likely to be already known to many or most users (e.g. if they perform a function which is very common across many different games and this has been the case for a long time), thereby making it less likely that a user requires them to be explicitly indicated.

In an example, the control plane 401B may initially display only the controls with a higher level of relevance to a given situation. After a trigger, additional controls with a lower level of relevance to the given situation may also be displayed. The trigger may be, for example, if no input is received from the user for more than a predetermined time period (e.g. 3, 5 or 10 seconds) or if a predetermined input indicating a desire for the additional controls to be displayed is received from the user. The predetermined input involves a user input via the controller 140 which does not correspond to a function in the game, for example. This helps avoid any ambiguity in user input. For example, if no function in the game is assigned to a particular button on the controller 140, pressing this button causes the additional controls to be indicated. In an example, a particular combination of button presses (e.g. pressing two specific buttons simultaneously) or another type of input (e.g. performing a swipe of the touch pad 305 in a predetermined direction or with a predetermined pattern) which does not correspond to a function in the game is used to trigger the indication of additional controls in the control pane 401B. The predetermined input may be standardised so that the same predetermined input is used to trigger the indication of additional controls in all games.

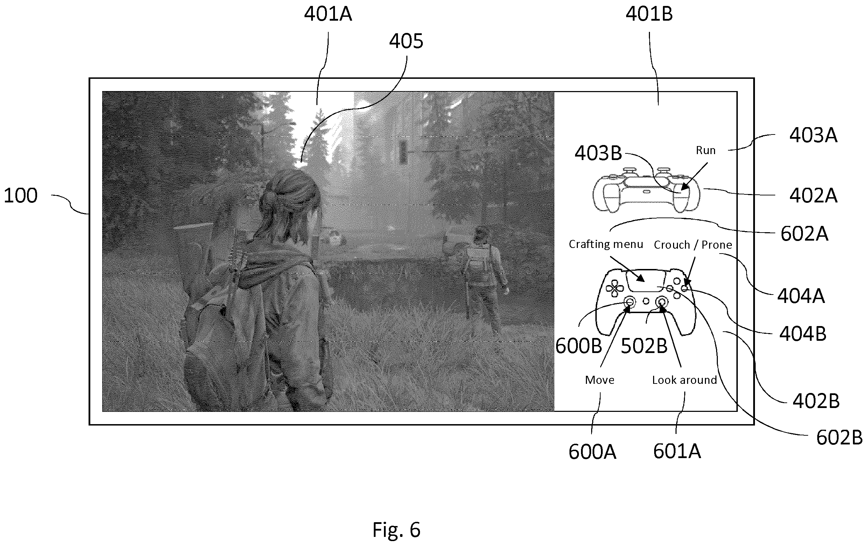

An example of the indication of additional controls is shown in Fig. 6. Here, the in-game situation is the same as that of Fig. 4 (that is, the first, non-combat, situation). However, in this case, the indication of additional controls has been triggered. The additional controls are shown in addition to the previously described "Run" and "Crouch / Prone" controls and include a "Crafting menu" control, a "Move" control and a "Look around" control.

The "Crafting menu" control is indicated by a label 602A "Crafting menu" pointing to a representation 602B of the touch pad 305 in the image. This indicates to the user that a crafting menu (allowing a user to make or upgrade existing weaponry based on materials collected in the virtual game environment, for example) can be accessed via the touch pad 305 on the controller 140 (e.g. by pressing down on the touch pad when it is also operable as a button or by performing a swipe of the touch pad 305 in a predetermined direction or with a predetermined pattern). The function of accessing the crafting menu is an example of a non-fundamental function, since the user may still play the game without accessing the crafting menu. However, accessing the crafting menu may enhance the user's gaming experience.

The "Move" control is indicated by a label 600A "Move" pointing to a representation 600B of the left joystick 303L in the image. This indicates to the user that the character 405 controlled by the user in the game can be caused to move around the virtual game environment by moving the left joystick 303L on the controller 140.

The "Look around" control is indicated by a label 601A "Look around" pointing to the representation 502B of the right joystick 303R in the image. This indicates to the user that the character 405 controlled by the user in the game can be caused to look around the virtual game environment (resulting in a change in the yaw, pitch and/or roll of the point of view of the character which is displayed in the gaming pane 401A, for example) by moving the right joystick 303R on the controller 140.

The "Move" and "Look around" controls may be used simultaneously to allow the user to cause the character 405 to explore the virtual game environment. The left and right joysticks 303L, 303R may perform the same "Move" and "Look around" functions in many different games and may therefore be already known by many users. Thus, in this example, although they perform the fundamental function of enabling the character 405 to explore the virtual game environment, they are not initially indicated as first, higher, relevance level controls with the "Run" and "Crouch / Prone" controls. Rather, they are indicated as second, lower, relevance level controls along with the "Crafting Menu" control.

The controls belonging to each relevance level may depend on the specific video game being played and may be configured by the video game developer and/or by the user themselves (e.g. using a suitable configuration screen (not shown) of the video game or the like). There may also be more than two levels of control relevance, with controls of each relevance level being sequentially indicated in response to respective triggers. For example, if there are three levels of control relevance for a given in-game situation (e.g. combat situation, non-combat situation, etc.), controls of the first relevance level will be indicated in the control pane 401B immediately at the start of the in-game situation. Following a first trigger (e.g. expiry of a first predetermined time period with no user input and/or receiving a first predetermined input from the user), controls of the second relevance level will be indicated. Then, following a second trigger (e.g. expiry of a second predetermined time period and/or receiving a second predetermined input from the user), controls of the third relevance level will be indicated. This allows the number and nature of the indicated controls to be dynamically adjusted depending on the way the user interacts with the video game via the controller 140.

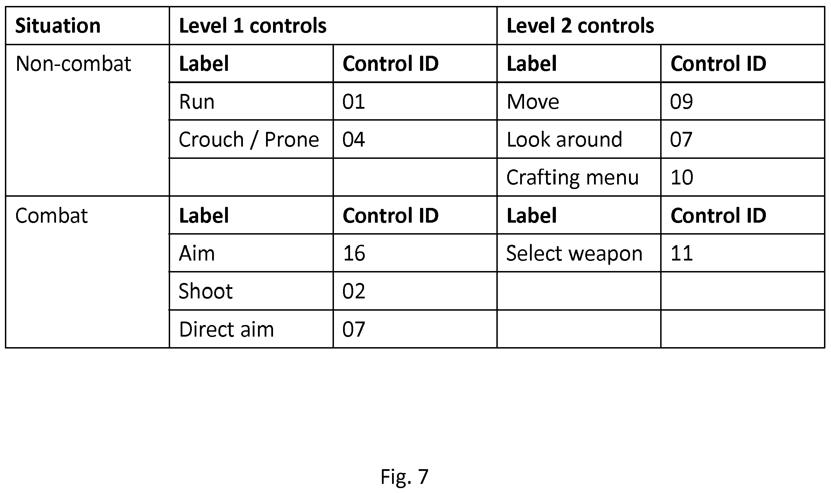

Fig. 7 shows an example lookup table generated by a video game designed to be compatible with the present technique. The lookup table is an example of a data structure having a predetermined format. The data structure in the predetermined format is readable by a control indication software application (control indication application) executed by the CPU 20 and/or GPU 30 of the games console 110. The lookup table indicates the controls at each relevance level applicable to each of a plurality of in-game situations. For simplicity, this example only defines the controls for two in-game situations, the "non-combat" situation (exemplified in Figs. 4 and 6) and the "combat" situation (exemplified in Fig. 5). In reality, there may be a larger number of in-game situations (for instance, different "combat" situations depending on whether the character 405 is standing or lying down or different "non-combat" situations depending on whether the user is located indoors or outdoors in the virtual game environment). In this example, each situation is associated with Level 1 controls (with a higher relevance) and Level 2 controls (with a lower relevance). However, as discussed, there may be a greater number of relevance levels (in which case, Level 3 controls, Level 4 controls and so on may also be defined).

The Level 1 controls associated with the non-combat situation (these being a first set of controls) include the "Run" and "Crouch / Prone" controls. Since they are Level 1 controls, these are indicated immediately in the control pane 401B in response to the start of the non-combat situation (as exemplified in Fig. 4). The Level 2 controls associated with the non-combat situation (these being a second set of controls) include the "Move", "Look around" and "Crafting menu" controls. Since they are Level 2 controls, these are only indicated in the control pane 401B in response to a further trigger (e.g. expiry of a predetermined time period or receiving of a predetermined input from the user) after the non-combat situation has already started (as exemplified in Fig. 6).

Similarly, the Level 1 controls associated with the combat situation (these being a third set of controls) include the "Aim", "Shoot" and "Direct aim" controls. Again, since they are Level 1 controls, these are indicated immediately in the control pane 401B in response to the start of the combat situation (as exemplified in Fig. 5). The Level 2 controls associated with the combat situation (these being a fourth set of controls) include a "Select weapon" control. This has not previously been exemplified in the drawings but relates, for example, to allowing the user to control the character 405 to select one of a plurality of different weapons to use during combat with an enemy character in the game. Again, since the "Select weapon" control is a Level 2 control, it is only indicated in the control pane 401B in response to a further trigger (e.g. expiry of a predetermined time period or receiving of a predetermined input from the user) after the combat situation has already started.

Each control is defined by a label and a control ID. The control ID, in this example, is a number. Each physical control of the controller 140 is uniquely mapped to respective a control ID in advance, for example.

In this example, for the non-combat situation, the "Run" control is mapped to the control ID 01, which corresponds to the button 305L on the controller 140 (and its associated representation 403B in the image 402A). The "Crouch / Prone" control is mapped to the control ID 04, which corresponds to the rightmost function control button 307 on the controller 140 (and its associated representation 404B in the image 402B). The "Move" control is mapped to the control ID 09, which corresponds to the left joystick 303L on the controller 140 (and its associated representation 600B in the image 402B). The "Look around" control is mapped to the control ID 07, which corresponds to the right joystick 303R on the controller 140 (and its associated representation 502B in the image 402B). The "Crafting menu" control is mapped to the control ID 10, which corresponds to the touch pad 305 on the controller 140 (and its associated representation 602B in the image 402B). The "Move" control is mapped to the control ID 09, which corresponds to the left joystick 303L on the controller 140 (and its associated representation 600B in the image 402B).

Similarly, for the combat situation, the "Aim" control is mapped to the control ID 16, which corresponds to the button 306L on the controller 140 (and its associated representation 500B in the image 402A). The "Shoot" control is mapped to the control ID 02, which corresponds to the button 306R on the controller 140 (and its associated representation 501B in the image 402A). The "Direct aim" control is mapped to the control ID 07, which corresponds to the right joystick 303R on the controller 140 (and its associated representation 502B in the image 402B). The "Select weapon" control is mapped to the control ID 11, which corresponds to the up directional button 308 on the controller 140 (and its associated representation in the image 402B).

In an example, the unique mapping between control ID and physical control (and the representation of that physical control in the image 402A and/or 402B) is determined in advance and the control indication software application is configured with this mapping. Execution of the control indication software application causes the display of the control pane 401B alongside the gaming pane 401A with the images 402A and 402B annotated depending on the current situation, the relevance level of the controls to be displayed and the data structure. Each situation may be associated with a respective unique situation ID (e.g. a number). In Fig. 7, for example, the non-combat situation may be associated with situation ID 01 and the combat situation may be associated with situation ID 02. The video game (also executed by the CPU 20 and/or GPU 30 of the games console 110, for example) is configured to indicate the situation ID of the current situation to the control indication application. The control indication application will also monitor for the trigger associated with indicating lower relevance level controls. This allows the control indication application to determine and display the correct controls for the given situation and relevance level.

Thus, in an example, when a video game software application (video game application, that is, the software defining a video game) is started, it generates a data structure in the form of the lookup table of Fig. 7 and makes this available to the control indication application. The user then plays the video game and the situation ID of the current situation is indicated by the video game application to the control indication application. Thus, for instance, when the user is in the non-combat situation of Figs. 4 or 6 with situation ID 01, it is the situation ID 01 which is indicated to the control indication application. On the other hand, when the user is in the combat situation of Fig. 5 with situation ID 02, it is the situation ID 02 which is indicated to the control indication application. In response to the indicated situation ID, the control indication application knows which controls to indicate in the control pane 401B.

In particular, in response to the situation ID 01 being indicated by the video game application to the control indication application, the control indication application knows it is the higher relevance level "Run" and "Crouch / Prone" controls associated with the non-combat situation which are to be displayed in the control pane 401B (as exemplified in Fig. 4, using the "Run" and "Crouch / Prone" labels of Fig. 7). On the other hand, in response in response to the situation ID 02 being indicated by the video game application to the control indication application, the control indication application knows it is the higher relevance level "Aim", "Shoot" and "Direct aim" controls associated with the combat situation which are to be displayed in the control pane 401B (as exemplified in Fig. 6, using the "Aim", "Shoot" and "Direct aim" labels of Fig. 7). In an example, video game application continuously indicates the situation ID of the current situation and this is continuously monitored by the control indication application. A change in the situation ID then results in a change in the indicated controls.

The control indication application also monitors for one or more triggers for causing the indication of lower relevance level controls for the current situation in the control pane 401B.

Thus, for instance, in response to the non-combat situation with situation ID 01 being indicated by the video game application to the control indication application, the control indication application initially causes the higher relevance level (Level 1) controls "Run" and "Crouch / Prone" to be indicated in the control pane 401B (as exemplified in Fig. 4). The control indication application then monitors for the trigger. For example, the control indication application monitors for the expiry of a predetermined time period in which no input from the user is received and/or monitors for the predetermined input from the user (e.g. pressing of a predetermined button or combination of buttons on the controller 140). In response to the trigger, the control indication software causes the lower relevance level (Level 2) controls "Move", "Look around" and "Crafting menu" to be indicated in the control pane 401B (as exemplified in Fig. 6, using the "Move", "Look around" and "Crafting menu" labels of Fig. 7).

Similarly, in response to the combat situation with situation ID 02 being indicated by the video game application to the control indication application, the control indication application initially causes the higher relevance level (Level 1) controls "Aim", "Shoot" and "Direct aim" to be indicated in the control pane 401B. In response to the trigger, the control indication software causes the lower relevance level (Level 2) control "Select weapon" to be indicated in the control pane 401B (using the "Select weapon" label of Fig. 7). This example is not shown in the drawings.

The trigger may be the same or may be different for different in-game situations. For example, if the trigger is expiry of a predetermined time period in which no input from the user is received (an inactivity time period), the predetermined time period may be shorter for a combat situation (in which the user has a tighter time constraint to take suitable action due to being under attack from an enemy character) and longer for a non-combat situation. The trigger associated with each in-game situation may be indicated to the control indication application with the data structure (e.g. the table of Fig. 7) indicating the various in-game situations and the control labels and control IDs associated with each in-game situation, for example. This allows the indication of controls of different relevance levels to be better tailored to the requirements of the user depending on the situation they are facing in the video game.

In an example, the control indication application and video game application are run concurrently as separate applications (e.g. by the CPU 20 and/or GPU 30 of the games console 110). Furthermore, the data structure (e.g. the table of Fig. 7) indicating the label and control ID for each control to be indicated for each relevance level for each in-game situation may take a standardised format associated with the control indication application so that different video game applications provide the data structure in this standardised format (with only the content of the data structure, such as the number of different situations and the control ID and label for each control to be indicated for each relevance level and for each situation, being changed for different video game applications). This enables game developers to easily implement the indication of controls (e.g. in the control pane 401B) in video games they develop, since all they need to do is configure the video game application to generate the data structure in the standardised format. The indication of the controls (e.g. in the control pane 401B) is then implemented by the control indication application based on the data structure. This approach also enables the indication of the controls to take a consistent format for different video games, thereby helping ensure a consistent and familiar experience for users.

Instead of being a software application, the control indication may instead by implemented in a different way, for example as system software (e.g. software which is part of the operating system of the games console 110). In any case, the control indication involves causing the generation and output of information indicating the relevant controls concurrently with the output of the video game content. It does this based on a data structure (e.g. the table of Fig. 7), an identifier of the current in-game situation (e.g. situation ID) generated by the video game application and by monitoring one or more triggers to determine the relevance level of controls to be displayed, as previously explained. This is exemplified in the drawings, in which the gaming pane 401A and control pane 401B are displayed concurrently and the control pane 401B is updated in real time depending on an in-game situation of the video game content. The user may turn the control indication functionality on and off using a system menu and/or in-game menu, for example.

The exemplified control pane 401B is only one example way of dynamically indicating the controls relevant to the current in-game situation in real time to a user. The control pane 401B may, for example, take a different format. For instance, instead of the video game content being cropped (by displaying only a portion of each frame of the video game content) to fit into the gaming pane 401A and the gaming pane 401A being displayed alongside the control pane 401B, the video game content may remain unaltered and the control pane 401B may be overlaid on the video game content. In an example, the overlaid control pane 401B is semitransparent manner so that the video game content behind the overlaid control pane 401B can still be at least partially seen. The control pane 401B may also be rendered in one or more different locations on the screen of the display device 100 to the location shown. The graphics of the control pane 401B itself which indicate the relevant controls may also be different to that shown. For example, they may show images and/or animations indicating the relevant controls instead of or in addition to the textual labels. A non-visual indicator may also be provided, such as an audio indicator output by a loudspeaker (not shown) of the display device 100, HMD 130 and/or controller 140 or a haptic indicator output by a vibrator (not shown) of the HMD 130 and/or controller 140. Such non-visual indicators may be periodically repeated at a predetermined time period (e.g. every 3, 5 or 10 seconds).

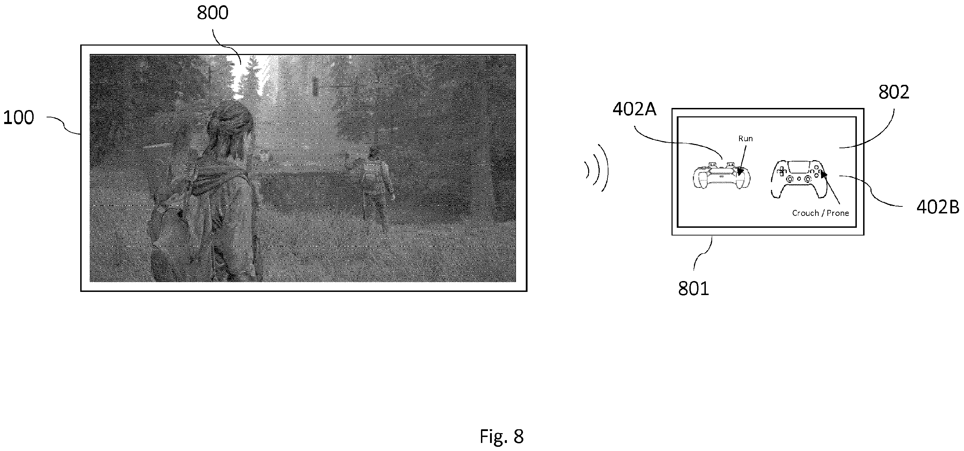

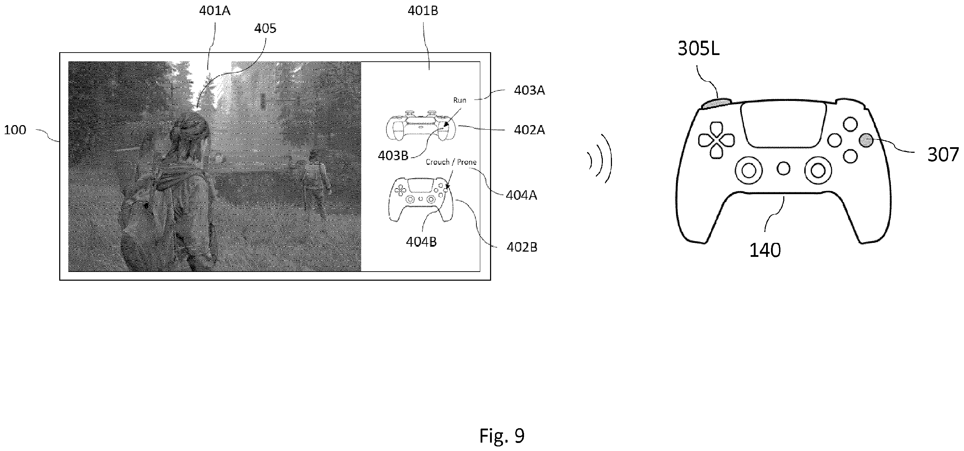

The relevant controls may also be indicated using one or more further devices instead of or in addition to the display device 100 and/or HMD 130 (it is noted that, although the described examples show images such as the gaming plane 401A and control plane 401B being output by the display device 100, these could instead by output by the HMD 130). Examples of this are shown in Figs. 8 and 9.

In Fig. 8, the further device is a tablet computer 801 (although it may also be, for example, a smartphone or laptop computer) running a software application (using a processor and memory of the tablet computer, not shown) which enables it to establish a data connection with the games console 110 and to cause the tablet computer to display the relevant controls. In this example, the tablet computer shows a control screen 802 including the images 402A and 402B of the controller 140 and indicates the "Run" and "Crouch / Prone" controls.

In an example, data is transmitted between the games console 110 and tablet computer 801 via the data port(s) 60 and via a communications interface (not shown) of the tablet computer 801. The data may be transmitted via a Wi-Fi ^{®} or Bluetooth ^{®} connection established between the games console and tablet computer, for example. The connection may be an encrypted connection for improved security.

In an example, a data structure (e.g. the table of Fig. 7) and identifier of the current in-game situation (e.g. situation ID) generated by the video game application executed on the games console 110 are transmitted to the tablet computer 801 over the established connection. The software application of the tablet computer then causes the tablet computer to display the relevant controls. The games console 110 is also controlled to monitor the one or more triggers to determine the relevance level of controls to be displayed and indicate to the tablet computer the relevance level of the controls to be displayed. Thus, for example, in a given in-game situation, if the tablet computer is indicating controls of the first relevance level and user input via the controller 140 is not detected by the games console 110 for an inactivity time period, the games console 110 is controlled to transmit a trigger indicator (e.g. a flag) to the tablet computer indicating that the controls of the next, lower, relevance level should be displayed.

In an example, the software application executed by the tablet computer to enable the control indication is downloadable to the tablet computer (e.g. via the Apple ^{®} App Store or Google ^{®} Play Store). The games console 110 is also provided with software (in the form of an application or system software, for example) to enable it to communicate with the tablet computer. For example, the games console software (executed by the CPU 20 and/or GPU 30, for example) allows the games console to communicate to the tablet computer information such as the data structure (e.g. the table of Fig. 7) and identifier of the current in-game situation (e.g. situation ID) generated by the current video game application. The games console software may also configure the games console to detect the trigger(s) for changing the indicated controls based on their relevance level and, in response, transmit a trigger indicator to the tablet computer.

In an example, if the controls are indicated on a separate device such as the tablet computer 801, the display device 100 is able to show a full-screen image 800 of the video game content rather than showing, for example, a cropped form of the video game content on only a portion of the screen (e.g. in gaming pane 401A). Allowing the controls to be indicated using a separate device to that on which the video game content is to be displayed may therefore help provide a more immersive video game experience for the user. In addition, the user is provided with more flexibility regarding the control indication. For instance, the user is able to physically move the separate device to a location which is most suitable for the user and their specific circumstances.

In Fig. 9, the further device is the controller 140 itself. Here, in addition to the controls being indicated in the control pane 401B shown on the display device 100 (in this case, the controls are the "Run" and "Crouch / Prone" controls of the non-combat situation originally exemplified in Fig. 4), the controls are also indicated on the controller itself. In this example, each control of the controller 140 (including the buttons, touchpad and joysticks) is provided with a respective electronic lighting element (e.g. a light emitting diode, LED, not shown) which, under the control of the control circuitry 204, can be turned on or off depending on one or more control IDs transmitted from the games console 110 to the controller 140 (e.g. via data port(s) 60 and communication interface 202). The control IDs are those exemplified with respect to Fig. 7, for example, and each control of the controller 140 is uniquely mapped to a control ID.

The control circuitry 204 of the controller 140 is configured with the control ID mapping and receives the control IDs of the controls to be indicated from the games console 110. Thus, in the example of Fig. 9 in which the "Run" and "Crouch / Prone" controls are indicated (which, respectively, correspond to the button 305L with control ID 01 and the button 307 with control ID 04), the games console is configured to transmit information indicative of the control IDs 01 and 04 to the controller 140. In response, the control circuitry 204 of the controller 140 causes the lighting elements of the buttons 305L and 307 to illuminate. This helps further indicate the relevant controls to the user.

In an example, an updated set of control IDs is transmitted to the controller 140 each time the in-game situation changes and each time the relevance level of the controls changes.

Thus, for example, if the user's character 405 in the non-combat situation of Fig. 9 moves to a combat situation, as well as the control pane 401B being updated to now show the "Aim", "Shoot" and "Direct aim" controls instead of the "Run" and "Crouch / Prone" controls (as previously described), the control IDs 16, 02 and 07 corresponding to the "Aim" button 306L, the "Shoot" button 306R and "Direct aim" joystick 303R, respectively, are transmitted to the controller 140. This causes the controller to illuminate the controls 306L, 306R and 303R instead of the previously illuminated controls 305L and 307.

In another example, if no input is received from the user over an inactivity time period when the user's character is in the non-combat situation of Fig. 9, thereby triggering indication of the lower relevance "Move", "Look around" and "Crafting menu" controls, as well as the control plane 401B being updated to now show the "Move", "Look around" and "Crafting menu" controls in addition to the "Run" and "Crouch / Prone" controls (as previously described), the control IDs 09, 07 and 10 corresponding to the "Move" joystick 303L, the "Look around" joystick 303R and the "Crafting menu" touchpad 305, respectively, are transmitted to the controller 140. The control IDs 01 and 04 corresponding to the "Run" button 305L and "Crouch / Prone" button 307 are also transmitted to the controller (since these buttons are to remain illuminated in the same way that they remain indicated with the "Move", "Look around" and "Crafting menu" controls in on the control plane 401B). This causes the controller to illuminate the controls 303L, 303R and 305 in addition to the previously illuminated controls 305L and 307.

In an example, unless updated, the current illuminated controls remain illuminated for a predetermined period of time or until a preconfigured "end" control ID (that is, a control ID which is not assigned to any of the specific controls on the controller 140, for example) is transmitted to the controller 140 by the games console 110. The "end" control ID may be transmitted to the controller 140 when the user pauses or ends the video game, for example.

In an example, the controls may be indicated on the controller 140 (e.g. through illumination) without simultaneous indication on the display device 100. This allows a full-screen image of the video game content to be displayed (like that exemplified in Fig. 8, for example), thereby allowing the user to enjoy a more immersive video game experience. At the same time, indication of the controls on the controller 140 itself still allows the user to quickly and easily identify the controls relevant to the current in-game situation.

The controller 140 may comprise different or additional components to the described lighting elements to further help indicate the relevant controls. For instance, the controller 140 may comprise one or more displays (e.g. liquid crystal displays (LCDs), organic light emitting diode (OLED) displays or the like, not shown) controlled by the control circuitry 204 to provide additional information regarding the indicated controls.

For instance, the controller 140 may comprise a single display indicating a control screen indicating the controls (like the control screen 802 of Fig. 8, for example).

Alternatively, or in addition, one or more of the controls of the controller 140 may each comprise a respective display to indicate the function currently assigned to that control. For example, each of the button, touchpad and joysticks may each comprise a respective display. This would allow, for example, the button 307 to indicate that it is the "Crouch / Prone" button and the button 305L to indicate it is the "Run" button. This may be indicated by rendering appropriate text and/or images on the display of each respective control. For instance, the word "Run" and/or an image of a person running may be rendered on the display of the button 305L and the words "Crouch / Prone" and/ or an image of a person crouching may be rendered on the display of the button 307.

Data indicating the information to be displayed on the one or more displays of the controller 140 may be transmitted to the controller 140 by the games console 110 with the relevant control ID(s). For example, the label "Run" (or an image of a person running) may be transmitted to the controller 140 with the control ID 01 corresponding to button 305L or the label "Crouch / Prone" (or an image of a person crouching) may be transmitted to the controller 140 with the control ID 04 corresponding to the button 307.

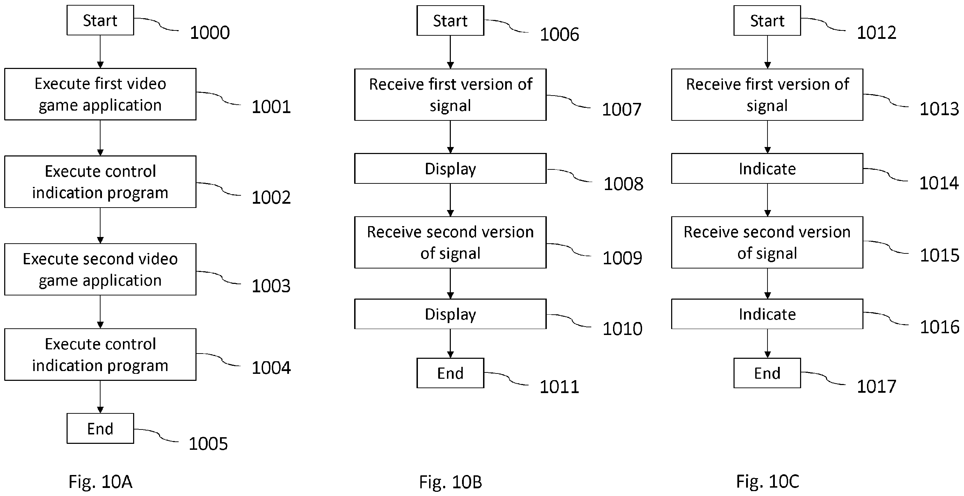

A first method according to the present technique is shown in Fig. 10A. The first method is carried out by circuitry of a data processing apparatus (e.g. the CPU 20 and/or GPU 30 of the games console 110).

The method starts at step 1000.

At step 1001, a first video game application is executed. Execution of the first video game application comprises generating first control information indicative of one or more controls for controlling the first video game application. For example, the first control information comprises an indication of one or more controls for controlling the first video game application for each of a plurality of in-game situations of the first video game application (e.g. non-combat situation, combat situation, etc.). The first control information may comprise an indication of a first set of one or more controls for controlling the first video game application (e.g. controls with a higher relevance level) and a second set of one or more controls for controlling the first video game application (e.g. controls with a lower relevance level). The first control information may comprise a data structure like that exemplified in Fig. 7, for example. The first control information may also indicate a current in-game situation of the first video game application (e.g. in the form of a situation ID of the current in-game situation).

At step 1002, a control indication program (e.g. control indication application and/or control indication system software) is executed using the first control information to indicate the one or more controls for controlling the first video game application to a user. For example, based on the data structure exemplified in Fig. 7, if the situation ID indicates the non-combat situation is the current in-game situation, then the "Run" and "Crouch / Prone" controls are indicated. On the other hand, if the situation ID indicates the combat situation is the current in-game situation, then the "Aim", "Shoot" and "Direct aim" controls are indicated. For the non-combat situation, "Run" and "Crouch / Prone" controls are examples of a first set of controls and the "Move", "Look around" and "Crafting menu" controls are examples of a second set of controls. The first set of controls initially displayed. The second set of controls are then displayed in response to detection of a trigger by the control indication program, as previously described.

At step 1003, a second video game application is executed. Execution of the second video game application comprises generating second control information indicative of one or more controls for controlling the second video game application. The second video game application is different to the first video game application. Again the second control information comprises an indication of one or more controls for controlling the second video game application for each of a plurality of in-game situations of the second video game application. The first control information may comprise an indication of a first set of one or more controls for controlling the second video game application (e.g. controls with a higher relevance level) and a second set of one or more controls for controlling the second video game application (e.g. controls with a lower relevance level). The second control information may comprise a data structure like that exemplified in Fig. 7 but populated with different situations and labels and associated control IDs corresponding to the second video game application, for example. The second control information may also indicate a current in-game situation of the second video game application (e.g. in the form of a situation ID of the current in-game situation).

At step 1004, the control indication program is executed using the second control information to indicate the one or more controls for controlling the second video game application to a user. That is, the same control indication program is used to indicate the controls of different video games to a user based on the control information generated by those video games. This allows video game developers to easily enable the indication of game controls to users without having to implement this functionality themselves. Rather, all they must do is configure each video game to generate the relevant control information (e.g. in a standardised format). This eases the technical burden of video game development. Furthermore, the use of a single control indication program to allow the indication of game controls to users for multiple different video games means the way in which the game controls are indicated for different video games is consistent. This helps the user to quickly and easily learn and be reminded of the game controls for different video games.

The method ends at step 1005.

A second method according to the present technique is shown in Fig. 10B. The second method is carried out by circuitry of a data processing apparatus having an electronic display (e.g. by a processor (not shown) and communications interface (not shown) of the tablet computer 801).

The method starts at step 1006.

At step 1007, a first version of a signal is received from a separate data processing apparatus (e.g. games console 110). The first version of the signal indicates one or more controls for controlling a first video game application executed by the separate data processing apparatus. The first version of the signal indicates, for example, the label and associated control ID of each control to be indicated to the user while they are playing the first video game. For instance, in the example of Fig. 8, the first version of the signal indicates the label "Run" with associated control ID 01 and the label "Crouch / Prone" with associated control ID 04.

At step 1008, in response to receiving the first version of the signal, the electronic display is controlled to display an image (e.g. control screen 802) indicating the one or more controls for controlling the first video game application.

At step 1009, a second version of the signal is received from the separate data processing apparatus. The second version of the signal is in the same format as the first version of the signal (and, like the first version of the signal, is generated by the content indication program executed by the separate data processing apparatus, e.g. the games console 110), for example, but comprises different content. In particular, the second version of the signal indicates one or more controls for controlling a second video game application executed by the separate data processing apparatus. For example, the second version of the signal may indicate the label and associated control ID of each control to be indicated to the user while they are playing the second video game.

At step 1010, in response to receiving the second version of the signal, the electronic display is controlled to display an image indicating the one or more controls for controlling the second video game application.

The method ends at step 1011.

A third method according to the present technique is shown in Fig. 10C. The third method is carried out by circuitry of a video game controller (e.g. communication interface 202 and control circuitry 204 of controller 140) having a user interface (e.g. user interface 203). The user interface is for receiving an input from a user via one of a plurality of controls (such as the buttons, joysticks and touchpad of the controller 140) and providing an output to a user (e.g. via electronic lighting element(s) and/or display(s) integrated into the controls).

The method starts at step 1012.

At step 1013, a first version of a signal is received from a data processing apparatus (e.g. games console 110). The first version of the signal indicates one or more of the game controls of the video game controller for controlling a first video game application executed by the data processing apparatus. The first version of the signal indicates, for example, the control ID of each control to be indicated to the user while they are playing the first video game. For instance, in the example of Fig. 9, the first version of the signal indicates the control ID 01 associated with the button 305L and the control ID 04 associated with the button 307.

At step 1014, in response to receiving the first version of the signal, the user interface of the video game controller is controlled to indicate the one or more game controls of the video game controller for controlling the first video game application to the user. For example, when each of the controls on the video game controller comprise a lighting element, the indicated controls may be illuminated in response receipt of the first version of the signal. This is exemplified in Fig. 9, in which the buttons 305L and 307 are illuminated.

At step 1015, a second version of the signal is received from the data processing apparatus. The second version of the signal is in the same format as the first version of the signal (and, like the first version of the signal, is generated by the content indication program executed by the data processing apparatus, e.g. the games console 110), for example, but comprises different content. In particular, the second version of the signal indicates one or more of the game controls of the video game controller for controlling a second video game application executed by the data processing apparatus. For example, the second version of the signal may indicate the control ID of each control to be indicated to the user while they are playing the second video game.

At step 1016, in response to receiving the second version of the signal, the user interface of the video game controller is controlled to indicate the one or more game controls of the video game controller for controlling the second video game application to the user.

The method ends at step 1017.

Embodiment(s) of the present disclosure are defined by the following numbered clauses:
1. A data processing apparatus comprising circuitry configured to:
   execute a first video game application, wherein execution of the first video game application comprises generating first control information indicative of one or more controls for controlling the first video game application;
   execute a control indication program using the first control information to indicate the one or more controls for controlling the first video game application to a user;
   execute a second video game application, wherein execution of the second video game application comprises generating second control information indicative of one or more controls for controlling the second video game application; and
   execute the control indication program using the second control information to indicate the one or more controls for controlling the second video game application to a user.
2. A data processing apparatus according to clause 1, wherein:
   the first control information comprises an indication of one or more controls for controlling the first video game application for each of a plurality of in-game situations of the first video game application and an indication of a current in-game situation of the first video game application, and
   execution of the control indication program using the first control information is to indicate the one or more controls for the current in-game situation of the first video game application to the user; and/or
   the second control information comprises an indication of one or more controls for controlling the second video game application for each of a plurality of in-game situations of the second video game application and an indication of a current in-game situation of the second video game application, and
   execution of the control indication program using the second control information is to indicate the one or more controls for the current in-game situation of the second video game application to the user;
3. A data processing apparatus according to any preceding clause, wherein:
   the first control information comprises an indication of a first set of one or more controls for controlling the first video game application and a second set of one or more controls for controlling the first video game application, and
   execution of the control indication program using the first control information comprises:
      causing an indication of the first set of one or more controls,
      detecting one or more first triggers, and
      in response to detecting the one or more first triggers, causing an indication of
   the second set of one or more controls; and/or
   the second control information comprises an indication of a first third of one or more controls for controlling the second video game application and a fourth set of one or more controls for controlling the second video game application, and
   execution of the control indication program using the second control information comprises:
      causing an indication of the third set of one or more controls,
      detecting one or more second triggers, and
      in response to detecting the one or more second triggers, causing an indication of the fourth set of one or more controls.
4. A data processing apparatus according to clause 3, wherein the one or more first and/or second triggers comprise detecting expiry of a predetermined time period over which no input from the user is detected.
5. A data processing apparatus according to clause 3 or 4, wherein the one or more first and/or second triggers comprise detecting a predetermined input from the user.
6. A data processing apparatus according to any preceding clause, wherein execution of the control indication program causes an image indicating the one or more controls for controlling the first and/or second video game application to be output for display with video game content of the first and/or second video game application.
7. A data processing apparatus according to any preceding clause, wherein execution of the control indication program causes a signal indicating the one or more controls for controlling the first and/or second video game application to be transmitted to a separate data processing apparatus.
8. A data processing apparatus according to clause 7, wherein:
   the separate data processing apparatus comprises a display; and
   the signal indicating the one or more controls for controlling the first and/or second video game application is for causing the separate data processing to display an image indicating the one or more controls for controlling the first and/or second video game application.
9. A data processing apparatus according to clause 7, wherein:
   the separate data processing apparatus is a video game controller for control the first and/or second video game application; and
   the signal indicating the one or more controls for controlling the first and/or second video game application is for causing a user interface of the game controller to indicate the one or more controls for controlling the first and/or second video game application to the user.
10. A data processing apparatus comprising:
   an electronic display; and
   circuitry configured to:
      receive, from a separate data processing apparatus, a first version of a signal indicating one or more controls for controlling a first video game application executed by the separate data processing apparatus;
      in response to receiving the first version of the signal, control the electronic display to display an image indicating the one or more controls for controlling the first video game application;
      receive, from the separate data processing apparatus, a second version of the signal indicating one or more controls for controlling a second video game application executed by the separate data processing apparatus; and
      in response to receiving the second version of the signal, control the electronic display to display an image indicating the one or more controls for controlling the second video game application.
11. A video game controller comprising:
   a user interface for receiving an input from and providing an output to a user, the user interface comprising a plurality of game controls; and
   circuitry configured to:
      receive, from a data processing apparatus, a first version of a signal indicating one or more of the game controls of the video game controller for controlling a first video game application executed by the data processing apparatus;
      in response to receiving the first version of the signal, control the user interface of the video game controller to indicate the one or more game controls of the video game controller for controlling the first video game application to the user;
      receive, from the data processing apparatus, a second version of the signal indicating one or more of the game controls of the video game controller for controlling a second video game application executed by the data processing apparatus;
      in response to receiving the second version of the signal, control the user interface of the video game controller to indicate the one or more game controls of the video game controller for controlling the second video game application to the user.
12. A data processing method comprising:
   executing a first video game application, wherein execution of the first video game application comprises generating first control information indicative of one or more controls for controlling the first video game application;
   executing a control indication program using the first control information to indicate the one or more controls for controlling the first video game application to a user;
   executing a second video game application, wherein execution of the second video game application comprises generating second control information indicative of one or more controls for controlling the second video game application; and
   executing the control indication program using the second control information to indicate the one or more controls for controlling the second video game application to a user.
13. A data processing method executable by circuitry of a data processing apparatus comprising an electronic display, the method comprising:
   receiving, from a separate data processing apparatus, a first version of a signal indicating one or more controls for controlling a first video game application executed by the separate data processing apparatus;
   in response to receiving the first version of the signal, controlling the electronic display to display an image indicating the one or more controls for controlling the first video game application;
   receiving, from the separate data processing apparatus, a second version of the signal indicating one or more controls for controlling a second video game application executed by the separate data processing apparatus; and
   in response to receiving the second version of the signal, controlling the electronic display to display an image indicating the one or more controls for controlling the second video game application.
14. A data processing method executable by circuitry of a video game controller comprising a user interface, the user interface being for receiving an input from and providing an output to a user and comprising a plurality of game controls, the method comprising:
   receiving, from a data processing apparatus, a first version of a signal indicating one or more of the game controls of the video game controller for controlling a first video game application executed by the data processing apparatus;
   in response to receiving the first version of the signal, controlling the user interface of the video game controller to indicate the one or more game controls of the video game controller for controlling the first video game application to the user;
   receiving, from the data processing apparatus, a second version of the signal indicating one or more of the game controls of the video game controller for controlling a second video game application executed by the data processing apparatus;
   in response to receiving the second version of the signal, controlling the user interface of the video game controller to indicate the one or more game controls of the video game controller for controlling the second video game application to the user.
15. A program for controlling a computer to perform a method according to any one of clauses 12 to 14.
16. A storage medium storing a program according to clause 15.

Numerous modifications and variations of the present disclosure are possible in light of the above teachings. It is therefore to be understood that, within the scope of the claims, the disclosure may be practiced otherwise than as specifically described herein.

In so far as embodiments of the disclosure have been described as being implemented, at least in part, by one or more software-controlled information processing apparatuses, it will be appreciated that a machine-readable medium (in particular, a non-transitory machine-readable medium) carrying such software, such as an optical disk, a magnetic disk, semiconductor memory or the like, is also considered to represent an embodiment of the present disclosure. In particular, the present disclosure should be understood to include a non-transitory storage medium comprising code components which cause a computer to perform any of the disclosed method(s).

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more computer processors (e.g. data processors and/or digital signal processors). The elements and components of any embodiment may be physically, functionally and logically implemented in any suitable way. Indeed, the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to these embodiments. Additionally, although a feature may appear to be described in connection with particular embodiments, one skilled in the art would recognize that various features of the described embodiments may be combined in any manner suitable to implement the present disclosure.

## Claims

1. A data processing apparatus comprising circuitry configured to:
execute a first video game application, wherein execution of the first video game application comprises generating first control information indicative of one or more controls for controlling the first video game application;
execute a control indication program using the first control information to indicate the one or more controls for controlling the first video game application to a user;
execute a second video game application, wherein execution of the second video game application comprises generating second control information indicative of one or more controls for controlling the second video game application; and
execute the control indication program using the second control information to indicate the one or more controls for controlling the second video game application to a user.

2. A data processing apparatus according to claim 1, wherein:
the first control information comprises an indication of one or more controls for controlling the first video game application for each of a plurality of in-game situations of the first video game application and an indication of a current in-game situation of the first video game application, and
execution of the control indication program using the first control information is to indicate the one or more controls for the current in-game situation of the first video game application to the user; and/or
the second control information comprises an indication of one or more controls for controlling the second video game application for each of a plurality of in-game situations of the second video game application and an indication of a current in-game situation of the second video game application, and
execution of the control indication program using the second control information is to indicate the one or more controls for the current in-game situation of the second video game application to the user;

3. A data processing apparatus according to any preceding claim, wherein:
the first control information comprises an indication of a first set of one or more controls for controlling the first video game application and a second set of one or more controls for controlling the first video game application, and
execution of the control indication program using the first control information comprises:
causing an indication of the first set of one or more controls,
detecting one or more first triggers, and
in response to detecting the one or more first triggers, causing an indication of the second set of one or more controls; and/or
the second control information comprises an indication of a first third of one or more controls for controlling the second video game application and a fourth set of one or more controls for controlling the second video game application, and
execution of the control indication program using the second control information comprises:
causing an indication of the third set of one or more controls,
detecting one or more second triggers, and
in response to detecting the one or more second triggers, causing an indication of the fourth set of one or more controls.

4. A data processing apparatus according to claim 3, wherein the one or more first and/or second triggers comprise detecting expiry of a predetermined time period over which no input from the user is detected.

5. A data processing apparatus according to claim 3 or 4, wherein the one or more first and/or second triggers comprise detecting a predetermined input from the user.

6. A data processing apparatus according to any preceding claim, wherein execution of the control indication program causes an image indicating the one or more controls for controlling the first and/or second video game application to be output for display with video game content of the first and/or second video game application.

7. A data processing apparatus according to any preceding claim, wherein execution of the control indication program causes a signal indicating the one or more controls for controlling the first and/or second video game application to be transmitted to a separate data processing apparatus.

8. A data processing apparatus according to claim 7, wherein:
the separate data processing apparatus comprises a display; and
the signal indicating the one or more controls for controlling the first and/or second video game application is for causing the separate data processing to display an image indicating the one or more controls for controlling the first and/or second video game application;
or wherein:
the separate data processing apparatus is a video game controller for control the first and/or second video game application; and
the signal indicating the one or more controls for controlling the first and/or second video game application is for causing a user interface of the game controller to indicate the one or more controls for controlling the first and/or second video game application to the user.

9. A data processing apparatus comprising:
an electronic display; and
circuitry configured to:
receive, from a separate data processing apparatus, a first version of a signal indicating one or more controls for controlling a first video game application executed by the separate data processing apparatus;
in response to receiving the first version of the signal, control the electronic display to display an image indicating the one or more controls for controlling the first video game application;
receive, from the separate data processing apparatus, a second version of the signal indicating one or more controls for controlling a second video game application executed by the separate data processing apparatus; and
in response to receiving the second version of the signal, control the electronic display to display an image indicating the one or more controls for controlling the second video game application.

10. A video game controller comprising:
a user interface for receiving an input from and providing an output to a user, the user interface comprising a plurality of game controls; and
circuitry configured to:
receive, from a data processing apparatus, a first version of a signal indicating one or more of the game controls of the video game controller for controlling a first video game application executed by the data processing apparatus;
in response to receiving the first version of the signal, control the user interface of the video game controller to indicate the one or more game controls of the video game controller for controlling the first video game application to the user;
receive, from the data processing apparatus, a second version of the signal indicating one or more of the game controls of the video game controller for controlling a second video game application executed by the data processing apparatus;
in response to receiving the second version of the signal, control the user interface of the video game controller to indicate the one or more game controls of the video game controller for controlling the second video game application to the user.

11. A data processing method comprising:
executing a first video game application, wherein execution of the first video game application comprises generating first control information indicative of one or more controls for controlling the first video game application;
executing a control indication program using the first control information to indicate the one or more controls for controlling the first video game application to a user;
executing a second video game application, wherein execution of the second video game application comprises generating second control information indicative of one or more controls for controlling the second video game application; and
executing the control indication program using the second control information to indicate the one or more controls for controlling the second video game application to a user.

12. A data processing method executable by circuitry of a data processing apparatus comprising an electronic display, the method comprising:
receiving, from a separate data processing apparatus, a first version of a signal indicating one or more controls for controlling a first video game application executed by the separate data processing apparatus;
in response to receiving the first version of the signal, controlling the electronic display to display an image indicating the one or more controls for controlling the first video game application;
receiving, from the separate data processing apparatus, a second version of the signal indicating one or more controls for controlling a second video game application executed by the separate data processing apparatus; and
in response to receiving the second version of the signal, controlling the electronic display to display an image indicating the one or more controls for controlling the second video game application.

13. A data processing method executable by circuitry of a video game controller comprising a user interface, the user interface being for receiving an input from and providing an output to a user and comprising a plurality of game controls, the method comprising:
receiving, from a data processing apparatus, a first version of a signal indicating one or more of the game controls of the video game controller for controlling a first video game application executed by the data processing apparatus;
in response to receiving the first version of the signal, controlling the user interface of the video game controller to indicate the one or more game controls of the video game controller for controlling the first video game application to the user;
receiving, from the data processing apparatus, a second version of the signal indicating one or more of the game controls of the video game controller for controlling a second video game application executed by the data processing apparatus;
in response to receiving the second version of the signal, controlling the user interface of the video game controller to indicate the one or more game controls of the video game controller for controlling the second video game application to the user.

14. A program for controlling a computer to perform a method according to any one of claims 11 to 13.

15. A storage medium storing a program according to claim 14.
